# EUROPEAN PATENT APPLICATION

(11) **EP 4 332 873 A1**
(43) Date of publication of application: **06.03.2024**
(21) Application number: 22824705.2
(22) Date of filing: 10.05.2022
(51) Int. Cl.: G06Q 50/10, G06Q 50/16, G07C 9/22, G07C 9/25, G07C 9/27

(54) **RECEPTION SYSTEM AND RECEPTION METHOD**

(30) Priority: 16.06.2021 JP 2021100320
(71) Applicant: NEC Platforms, Ltd., Kanagawa 213-8511 (JP)
(72) Inventor: ITOH, Toshihiko, Kawasaki-shi, Kanagawa 213-8511 (JP)
(74) Representative: Vossius & Partner Patentanwälte Rechtsanwälte mbB
(86) International application number: PCT/JP2022/019767
(87) International publication number: WO 2022/264711

(57) **Abstract**

A visitor is able to call a person in charge of reception without touching a reception telephone.

In a reception system, when the person in charge of reception registers visit information of a visitor beforehand, a visitor identification code is issued, and the visitor acquires the visitor identification code that has been issued on a mobile terminal of the visitor. The visitor holds the visitor identification code displayed on the mobile terminal (10) of the visitor over a reader that cooperates with a reception telephone (20) to cause the reader to read the visitor identification code. Then, the reception telephone (20) automatically makes a call to a communication device (40) of the person in charge of reception, the person in charge of reception responds on the communication device (40), and a hands-free call is established between the visitor and the person in charge of reception. The person in charge of reception confirms the visitor on a display unit (41) that cooperates with the communication device (40) from an image of the visitor imaged by a camera (22) that cooperates with the reception telephone (20), and entry of the visitor is permitted.

## Description

### Technical Field

The present disclosure relates to a reception system and a reception method, and more particularly, to a reception system and a reception method capable of suppressing virus infection.

### Background Art

In facilities such as companies, automatic reception systems for authenticating victors are widely used.

Patent Literature 1 discloses an entry and exit management system that totally checks whether a visitor who has visited a facility is appropriate, whether an action of the visitor in the facility is appropriate, and the like.

### Citation List

### Patent Literature

Patent Literature 1: Japanese Unexamined Patent Application Publication No. 2011-48817

### Summary of Invention

### Technical Problem

In a reception telephone system including a visitor reception telephone installed at an entrance of a company or the like, a visitor directly operates the reception telephone to call a person in charge of reception. For such a reason, in the COVID-19 pandemic, a large number of visitors touching the reception telephone leads to a rick of infecting other visitors with the virus. In the COVID-19 pandemic, in order to prevent the virus infection, there is a demand for a reception telephone system for visitors so that the visitor can call the person in charge of reception without touching the reception telephone.

In the entry and exit management system disclosed in Patent Literature 1, it is necessary for a visitor to image his/her face and register a face image beforehand. Hence, for example, even for a one-time visitor or the like, it is not appropriate to impose such a laborious task.

The present invention has been made to solve such a problem, and has an object to provide a reception system and a reception method that enable a visitor to call a person in charge of reception without touching a reception telephone.

### Solution to Problem

A reception system according to a first aspect of the present invention, in which
when a person in charge of reception registers visit information of a visitor beforehand, a visitor identification code is issued, and the visitor acquires the visitor identification code that has been issued on a mobile terminal of the visitor,
the visitor holds the visitor identification code displayed on the mobile terminal of the visitor over a reader that cooperates with a reception telephone to cause the reader to read the visitor identification code, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

A reception system according to a second aspect of the present invention, in which
a visitor causes a camera of a mobile terminal to read an identification code posted in a vicinity of a reception telephone, a predetermined site is displayed on a display of the mobile terminal, the visitor selects a desired person in charge of reception on the predetermined site, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

A reception method according to a third aspect of the present invention, in which
when a person in charge of reception registers visit information of a visitor beforehand, a visitor identification code is issued, and the visitor acquires the visitor identification code that has been issued on a mobile terminal of the visitor,
the visitor holds the visitor identification code displayed on the mobile terminal of the visitor over a reader that cooperates with a reception telephone to cause the reader to read the visitor identification code, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

A reception method according to a fourth aspect of the present invention, in which
a visitor causes a camera of a mobile terminal to read an identification code posted in a vicinity of a reception telephone, a predetermined site is displayed on a display of the mobile terminal, the visitor selects a desired person in charge of reception on the predetermined site, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

### Advantageous Effects of Invention

According to the present disclosure, it is possible to provide a reception system and a reception method that enable a visitor to call a person in charge of reception without touching a reception telephone.

### Brief Description of Drawings

Fig. 1 is a block diagram illustrating a configuration of a reception system according to a first example embodiment.
Fig. 2 is a conceptual diagram illustrating a configuration of a reception system according to a second example embodiment.
Fig. 3 is a sequence diagram for describing an example of an operation of the reception system according to the second example embodiment.
Fig. 4 is a sequence diagram for describing the operation of the reception system according to a modified example of the second example embodiment.
Fig. 5 is a sequence diagram for describing an example of another operation of the reception system according to a fourth example embodiment.
Fig. 6 is a block diagram illustrating a hardware configuration of each component element of the reception system.

### Example Embodiment

### First example embodiment

Hereinafter, example embodiments of the present invention will be described with reference to the drawings.

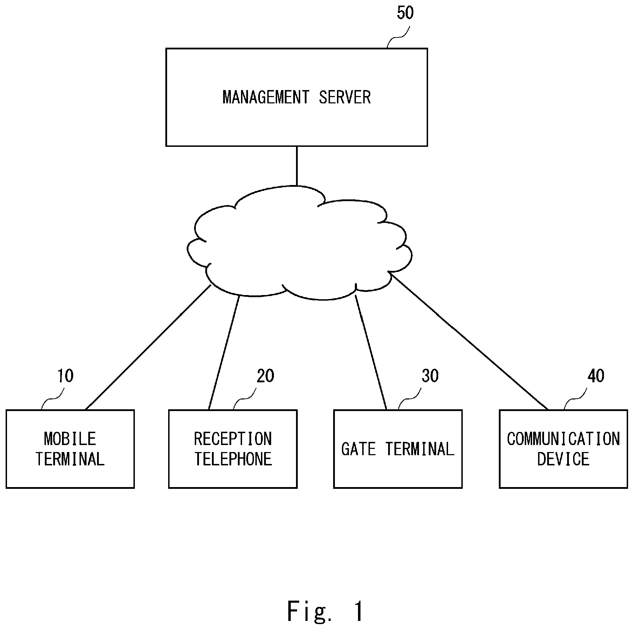

Fig. 1 is a block diagram illustrating a configuration of a reception system according to a first example embodiment.

The reception system can be used for authentication and building entry management of visitors. The reception system illustrated in Fig. 1 can include one or more mobile terminals 10, a reception telephone 20, a gate terminal 30, one or more communication devices 40, and a management server 50, which is connected through a wired or wireless network. The mobile terminal 10 is a terminal carried by a visitor. The reception telephone 20 can be arranged at an entrance of a facility. The gate terminal 30 can be arranged between the entrance of the facility and the inside of the facility in order to regulate entry from the outside. In some example embodiments, there can be some cases where the gate terminal 30 is not present. The communication device 40 can be placed on a desk or the like inside the facility. Each component element can be connected with each other through a network (including wired and wireless). The management server 50 can be implemented by a computer including a processor, a memory, and the like. The mobile terminal 10, the reception telephone 20, the gate terminal 30, and the communication device 40 can also be implemented by a computer including a processor, a memory, and the like.

In the reception system, when a person in charge of reception registers visit information of a visitor beforehand, a visitor identification code is issued. The visitor records the visitor identification code in the mobile terminal 10 of the visitor. By holding the visitor identification code displayed on the mobile terminal 10 of the visitor over a reader that cooperates with the reception telephone 20, the visitor causes the reader to read the visitor identification code. Then, it is configured such that the reception telephone 20 automatically makes a call to the communication device 40 of the person in charge of reception, the person in charge of reception responds to it, and then a hands-free call is established between the visitor and the person in charge of reception. The person in charge of reception confirms the visitor from the image of the visitor imaged by the camera that cooperates with the reception telephone 20 on a display unit 41 that cooperates with the communication device 40, and then the entry of the visitor is permitted.

According to the first example embodiment, it is possible to provide a reception system and a reception method that enable a visitor to call a person in charge of reception on a hands-free call without touching the reception telephone. In addition, since the person in charge of reception confirms the visitor's face on a monitor, it is not always necessary to register the visitor's face beforehand. This enables implementing the reception system that prevents virus from spreading via the reception telephone and that permits the entry in an unmanned manner.

### Second example embodiment

During the outbreak of an infectious disease, contact with an unspecified number of visitors at the reception and touching of shared facilities by an unspecified number of visitors increase the risk of spreading the infection. Hence, by reducing chances of the contact with an unspecified large number of visitors and reducing touching of the shared facilities by an unspecified large number of visitors, the problem of spreading the infection is solved.

In the present reception system, in a case where there is a preset appointment for a visit, an identification code such as a QR code (registered trademark) as a substitute for a building entry card is issued, and is sent to a visitor. By using the identification code when visiting, the visitor is able to call a visit destination from the reception telephone in a hands-free manner.

Also in a case where there is no appointment, by accessing a specific website of the reception system from a visitor's smartphone, the visitor is able to directly make a call to an intended visit destination (a person in charge of reception) in a hands-free manner.

In a case where the person in charge of reception determines that there is no problem with building entry of the visitor, the person in charge of reception registers entry permission in the reception system. Accordingly, the QR code (registered trademark) that has been issued beforehand or the QR code (registered trademark) that has been issued on the spot is configured to enable unlocking of a building entrance gate or the like.

According to the above method, the chances of the person in charge of reception contacting with an unspecified large number of people can be reduced, and the number of things touched by an unspecified large number of people such as the reception telephone can be reduced, so that the risk of infection during the outbreak of an infectious disease and the risk of spreading the infection can be reduced.

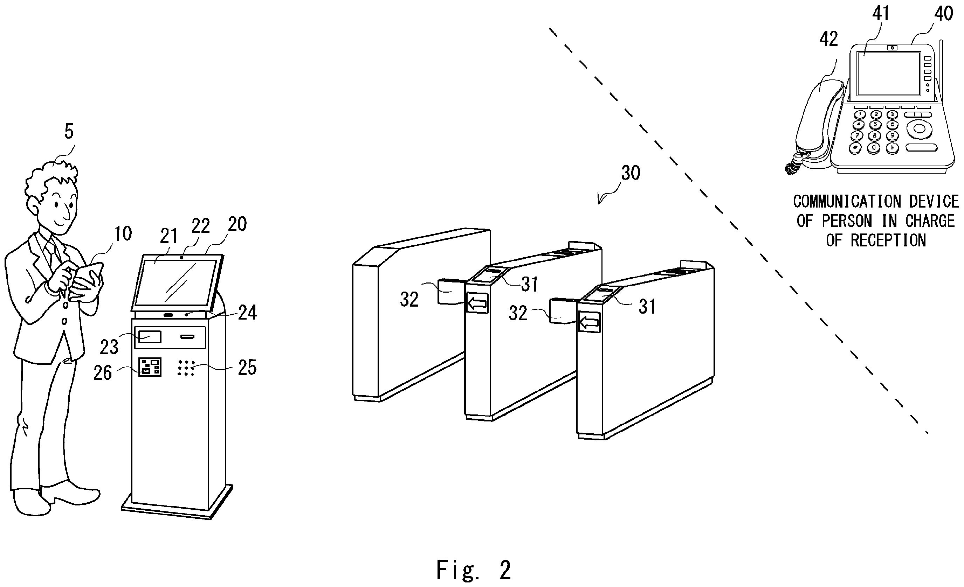

Fig. 2 is a conceptual diagram illustrating a configuration of a reception system according to a second example embodiment.

The reception telephone 20 is installed at an entrance or the like of a facility. The reception telephone 20 may be, for example, a kiosk terminal capable of making a call. The reception telephone 20 includes a display 21, a front camera 22, a scanner 23, and the like. In the present specification, a front camera 22 or a scanner 23 will be also referred to as a reader, in some cases. The reception telephone 20 does not include a receiver of an ordinary telephone, but includes a microphone 24 and a speaker 25 to enable a hands-free voice call.

The gate terminal 30 (for example, a flapper gate) is provided between an entrance of a facility and the inside of the facility (for example, an office where employees are working). The gate terminal 30 includes a reader 31 capable of reading a visitor identification code. The reader 31 can be any device such as a camera or a scanner. The gate terminal 30 includes an openable and closable gate 32. The visitor identification code mentioned here is a code for uniquely identifying a visitor, such as a barcode or a QR code (registered trademark). The visitor identification code can be associated with information (for example, name, telephone number, affiliation, and the like of a person in charge of reception) of a visit destination (the person in charge of reception).

The communication device 40 is installed on a desk of each employee inside the facility. The communication device 40 may include or may not necessarily include a receiver 42, which is a normal type as illustrated in Fig. 2. The communication device 40 includes the display unit 41 capable of displaying the face image of the visitor imaged by the front camera 22 of the reception telephone 20. The communication device 40 is not limited to the form illustrated in Fig. 2, and can take any form such as a desktop personal computer, a notebook personal computer, or a smartphone.

The mobile telephone 10, the reception telephone 20, the gate terminal 30, the communication device 40, and the management server 50 can be connected with one another through an in-house network (including wireless and wired LANs).

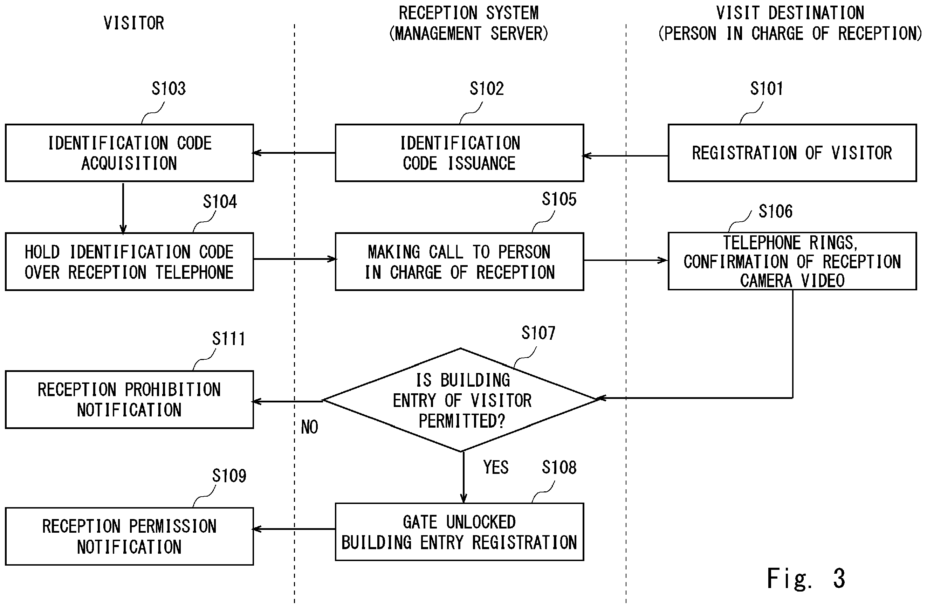

Next, an operation example of the reception system will be described with reference to Fig. 3.

Fig. 3 illustrates an example of a visit procedure in a case where there is an appointment.

The person in charge of reception registers visit information (for example, name, affiliation, visit date and time, and the like) of a visitor 5 beforehand in the reception system (step S101). Then, the reception system (the management server 50) issues a visitor identification code (for example, a QR code (registered trademark)) (step S102), and then the visitor 5 acquires the visitor identification code (step S103). The visitor 5 is able to record the visitor identification code in the mobile terminal 10 of the visitor from the reception system (the management server 50). For example, the mobile terminal 10 of the visitor 5 may receive a mail attached with the identification code from the reception system. Alternatively, by using the mobile terminal 10, the visitor 5 may access a predetermined site on the reception system and download the visitor identification code from the site.

Next, the visitor visits the facility in accordance with the appointment. By holding the visitor identification code displayed on the mobile terminal 10 of the visitor 5 over the reader (in the present example, the scanner 23) that cooperates with the reception telephone 20, the visitor 5 causes the reader to read the visitor identification code, and then the reception telephone 20 automatically makes a call to the communication device 40 of the person in charge of reception (step S105). That is, the visitor identification code is associated with the telephone number of the person in charge of reception who is the visit destination. Note that the reader that cooperates with the reception telephone 20 is not necessarily built in the reception telephone 20, and may be connected with the reception telephone 20 through a wired or wireless network. In addition, when the front camera 22 detects a person, the reception telephone 20 may notify the person by sound of voice via the speaker 25 so as to prompt the person "Please cause identification code to be read". In this case, a known image recognition technique can be used for detecting a person.

The person in charge of reception responds on the communication device 40, and thus a hands-free call is established between the visitor and the person in charge of reception, and the person in charge of reception confirms the visitor from a video of the visitor imaged by the camera 22 that cooperates with the reception telephone 20 (step S106). In a case of permitting building entry of the visitor (YES in step S107), the person in charge of reception operates the communication device 40 to register the entry permission (building entry registration) of the visitor 5 in the reception system (the management server 50), so that the gate can be unlocked (step S108). Reception permission is notified to the mobile terminal of the visitor 5 (step S109). This enables the visitor to meet the person in charge of reception.

According to the reception system according to the second example embodiment described above, by causing the identification code that has been issued beforehand to be read at the reception, the hands-free call is automatically established. After confirming the appearance of the visitor, the person in charge of reception is able to meet the visitor.

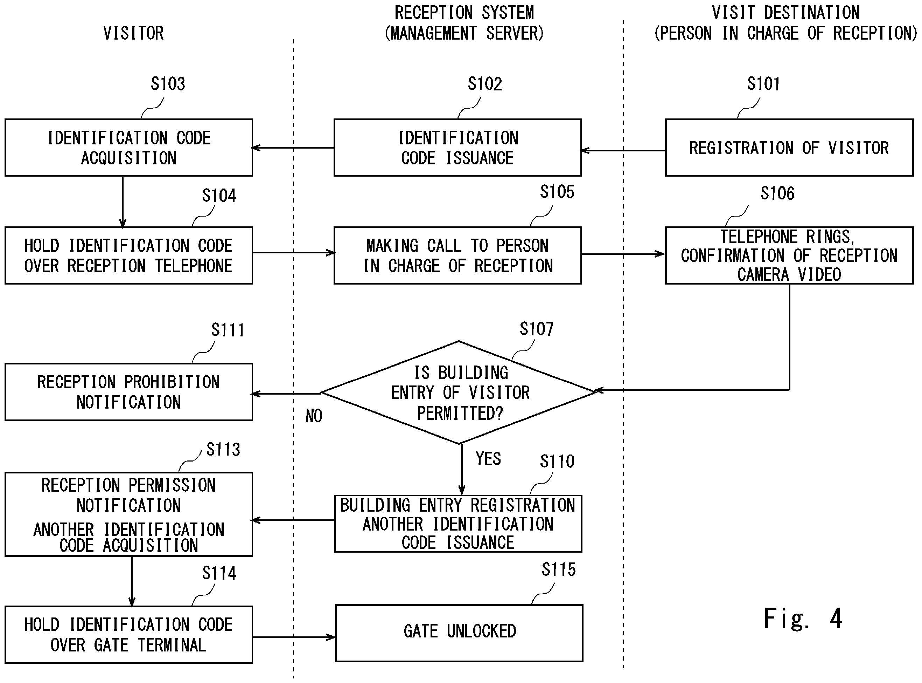

Fig. 4 is a sequence diagram for describing a modified example of an operation of the reception system according to the second example embodiment.

In the modified example of Fig. 4, as compared with the sequence diagram of Fig. 3, after the building entry is permitted to the visitor, another visitor identification code (hereinafter, can be referred to as a gate identification code) for passing through a gate is further issued.

That is, in the case of permitting the building entry of the visitor (YES in step S 107), the person in charge of reception operates the communication device 40 to register the entry permission of the visitor 5 in the reception system (building entry registration), and then the management server 50 issues a gate identification code that is another code (step S110). The visitor 5 acquires the gate identification code (step S113). The visitor 5 is able to record the gate identification code in the mobile terminal 10 of the visitor from the reception system (the management server 50) (for example, receive a mail attached with an identification code from the reception system or downloaded from a predetermined site on the reception system).

By holding the gate identification code possessed by the visitor to whom the entry has been permitted over a camera (in Fig. 2, the reader 31 of the gate terminal 30) installed in the vicinity of the gate (step S114), the gate 32 at an entrance is unlocked (step S115).

Note that in this modified example, the identification code issued in step S102 and another identification code issued in step S110 are different from each other. However, in another example embodiment, the identical identification code issued in step S102 may be used for the gate identification code. In addition, the gate identification code is not limited to an electronic identification code, and may be, for example, a paper identification code to be issued from a printer that cooperates with the reception telephone. In addition, in another modified example, any medium such as a guest building entry card or an IC card may be issued (for example, including an identification code) by an output unit that cooperates with the reception telephone, by using an existing building entry management method.

### Third example embodiment

The configuration of the reception system according to a third example embodiment is also similar to that in Fig. 1, and the details will be omitted. In the present example embodiment, a case where a visitor has not made an appointment with a person in charge of reception beforehand will be described.

In the reception system, the visitor causes the camera of the mobile terminal 40 to read the identification code posted in the vicinity of the reception telephone 20, a predetermined site is displayed on the display of the mobile terminal 40. The visitor selects a desired person in charge of reception on the predetermined site, and the reception telephone 20 automatically makes a call to the communication device 40 of the person in charge of reception. The person in charge of reception responds on the communication device 40, and thus a hands-free call is established between the visitor and the person in charge of reception. The person in charge of reception confirms the visitor from the image of the visitor imaged by the camera that cooperates with the reception telephone 20 on the display unit that cooperates with the communication device 40, and then the entry of the visitor is permitted.

As described heretofore, even in a case where there is no appointment, the visitor is able to make a hands-free call with the person in charge of reception without touching the reception telephone. This enables achieving a reception system that prevents virus infection.

### Fourth example embodiment

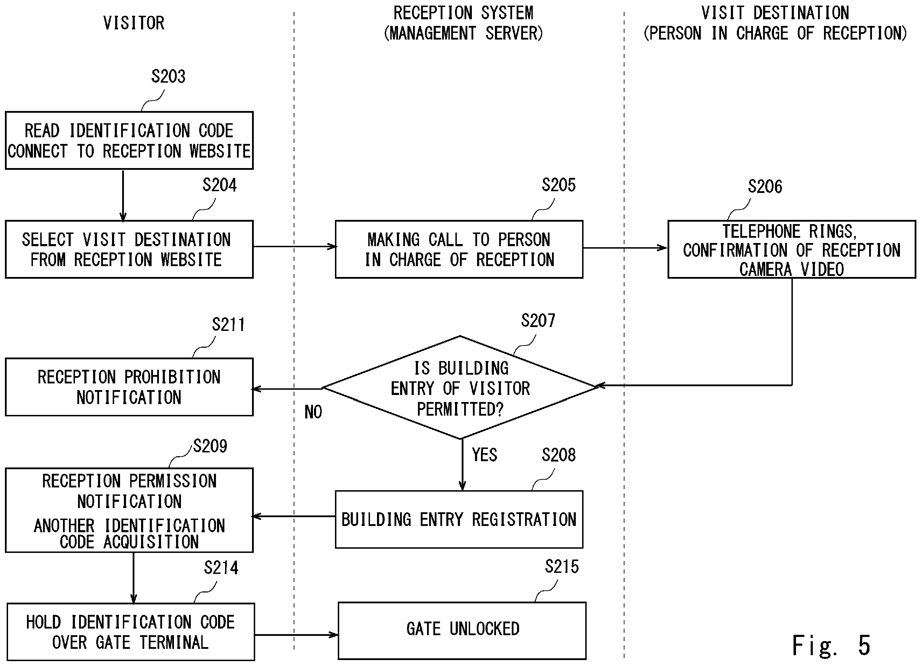

Another operation example of the reception system will be described with reference to Fig. 5.

Fig. 5 illustrates an example of a visit procedure in a case where there is no appointment. Also in the present example, the configuration of the reception system is similar to that illustrated in Fig. 2, and the details will be omitted.

When a visitor visits a facility and stands in front of the reception telephone 20, the front camera 22 detects the person, and the reception telephone 20 notifies the visitor by sound of voice via the speaker 25 to prompt the visitor "Please cause your smartphone to read identification code". When the visitor causes a camera built in the mobile terminal 10 (for example, a smartphone) to read the identification code (for example, a QR code (registered trademark), a bar code) 26 posted on the reception telephone 20 or in its vicinity, the mobile terminal is connected to dedicated Wi-Fi and connected to the reception system.

Reception telephone directory data is transmitted from the reception system to the mobile terminal, and a reception website (for example, a site indicating a reception telephone directory) is displayed on the display of the mobile terminal 10 (step S203). When the visitor selects a desired person in charge of reception from the reception telephone directory on the mobile terminal 10 (step S204), the reception system operates the reception telephone to make a call to the person in charge of reception that has been selected (step S205). Accordingly, the reception telephone 20 turns on the microphone 24 and the speaker 25 of the reception telephone 20, and a hands-free call between the visitor and the person in charge of reception is enabled.

When the person in charge of reception responds to an incoming call from the reception system (that is, the reception telephone 20) on the communication device 40, the call with the reception telephone 20 is enabled. The image of the visitor imaged by the camera 22 attached to the reception telephone 20 is displayed on the display unit 41 of the communication device 40 (that is, a telephone with a monitor) of the person in charge of reception, and while the person in charge of reception is confirming the visitor's face, the call between the person in charge of reception and the visitor of the reception telephone 20 is enabled (step S206). In this situation, the person in charge of reception may perform a predetermined operation on the communication device 40 to start a call.

In the case of permitting the building entry of the visitor (YES in step S207), the person in charge of reception registers the entry permission of the visitor in the reception system (step S208). For example, by performing a predetermined operation on the communication device 40, the person in charge of reception is able to register the entry permission of the visitor in the reception system. The reception system issues a gate identification code (for example, a QR code (registered trademark)) for a visitor, and the identification code that has been issued is acquired by the mobile terminal 10 of the visitor (step S209). Note that the visitor 5 may receive, on the mobile terminal 10, a mail attached with the gate identification code from the reception system. Alternatively, after a mail indicating that the reception system has made an issue is notified to the mobile terminal 10, the visitor 5 may access a predetermined site on the reception system and download the gate identification code from the site.

The visitor displays the received identification code (a QR code (registered trademark)) on a display of the mobile terminal 10 (for example, a smartphone), and holds the identification code over a camera (for example, in Fig. 2, the reader 31 of the gate terminal 30) installed at an entrance gate or in the vicinity of a door of a reception meeting room to cause the identification code to be read (step S214). Thus, it becomes possible to pass through the entrance gate and unlock the door of the reception meeting room (step S215), and the visitor is able to proceed into the facility and meet the person in charge of reception.

As described heretofore, even in a case where there is no appointment, the visitor is able to make a hands-free call with the person in charge of reception without touching the reception telephone. In addition, the person in charge of reception is able to directly confirm the face of the visitor on the monitor and permit the entry of the visitor without registering the image of the visitor beforehand. Accordingly, it becomes possible to suppress the virus infection.

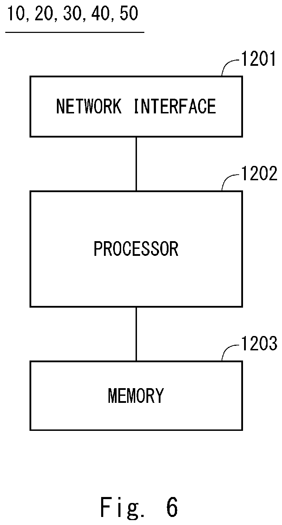

Fig. 6 is a block diagram illustrating configuration examples of the mobile terminal 10, the reception telephone 20, the gate terminal 30, the communication device 40, and the management server 50 (hereinafter, will be referred to as the mobile terminal 10 or the like). Referring to Fig. 6, the mobile terminal 10 or the like includes a network interface 1201, a processor 1202, and a memory 1203. The network interface 1201 is used to communicate with other network node devices constituting the communications system. The network interface 1201 may be used to perform wireless communication. For example, the network interface 1201 may be used to perform wireless LAN communication specified in IEEE 802.11 series or mobile communication specified in 3GPP (registered trademark) (3rd Generation Partnership Project). Alternatively, the network interface 1201 may include, for example, a network interface card (NIC) in compliance with IEEE 802.3 series.

By reading and executing software (a computer program) from the memory 1203, the processor 1202 performs processing of the mobile terminal 10 or the like that has been described by use of the flowchart or sequence in the above-described example embodiments. The processor 1202 may be, for example, a microprocessor, a micro processing unit (MPU), or a central processing unit (CPU). The processor 1202 may include a plurality of processors.

The memory 1203 is constituted of a combination of a volatile memory and a nonvolatile memory. The memory 1203 may include a storage disposed to be separated from the processor 1202. In this case, the processor 1202 may access the memory 1203 through an I/O interface, not illustrated.

In the example of Fig. 6, the memory 1203 is used to store a software module group. By reading and executing such a software module group from the memory 1203, the processor 1202 is capable of performing the processing of the mobile terminal 10 or the like that has been described in the above-described example embodiments.

As having been described with reference to Fig. 6, each of the processors included in the mobile terminal 10 or the like executes one or a plurality of programs including a command group for causing a computer to perform an algorithm that has been described with reference to the drawings.

Note that the present invention is not limited to the above example embodiments, and can be appropriately changed without departing from the gist. The plurality of examples that have been described above can be implemented in combination as appropriate.

Heretofore, the present invention has been described with reference to the example embodiments. However, the present invention is not limited to the above description. Various changes that can be understood by those skilled in the art can be made to the configuration and details of the present invention within the scope of the invention.

Some or all of the above example embodiments can be described as following supplementary notes, but are not limited to following descriptions.

### (Supplementary note 1)

A reception system in which
when a person in charge of reception registers visit information of a visitor beforehand, a visitor identification code is issued, and the visitor acquires the visitor identification code that has been issued on a mobile terminal of the visitor,
the visitor holds the visitor identification code displayed on the mobile terminal of the visitor over a reader that cooperates with a reception telephone to cause the reader to read the visitor identification code, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

### (Supplementary note 2)

A reception system in which
a visitor causes a camera of a mobile terminal to read an identification code posted in a vicinity of a reception telephone, a predetermined site is displayed on a display of the mobile terminal, the visitor selects a desired person in charge of reception on the predetermined site, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

### (Supplementary note 3)

The reception system described in the supplementary note 1, in which a gate is unlocked by holding the visitor identification code of the visitor to whom the entry has been permitted over a reader that cooperates with a gate terminal.

### (Supplementary note 4)

The reception system described in the supplementary note 1 or 2, in which after the entry of the visitor is permitted, a gate identification code is issued, the visitor acquires the gate identification code that has been issued on the mobile terminal of the visitor, and holds the gate identification code over a reader that cooperates with a gate terminal, and the gate is unlocked.

### (Supplementary note 5)

The reception system described in the supplementary note 1 or 2, in which after the entry of the visitor is permitted, an output unit that cooperates with the reception telephone issues a gate identification code as a medium that is either a sheet of paper or a card, the visitor holds the gate identification code over a reader that cooperates with a gate terminal, and the gate is unlocked.

### (Supplementary note 6)

A reception method in which
when a person in charge of reception registers visit information of a visitor beforehand, a visitor identification code is issued, and the visitor acquires the visitor identification code that has been issued on a mobile terminal of the visitor,
the visitor holds the visitor identification code displayed on the mobile terminal of the visitor over a reader that cooperates with a reception telephone to cause the reader to read the visitor identification code, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

### (Supplementary note 7)

A reception method in which
a visitor causes a camera of a mobile terminal to read an identification code posted in a vicinity of a reception telephone, a predetermined site is displayed on a display of the mobile terminal, the visitor selects a desired person in charge of reception on the predetermined site, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

### (Supplementary note 8)

The reception method described in the supplementary note 6, in which a gate is unlocked by holding the visitor identification code of the visitor to whom the entry has been permitted over a reader that cooperates with a gate terminal.

### (Supplementary note 9)

The reception method described in the supplementary note 6 or 7, in which after the entry of the visitor is permitted, a gate identification code is issued, the visitor acquires the gate identification code that has been issued on the mobile terminal of the visitor, and holds the gate identification code over a reader that cooperates with a gate terminal, and the gate is unlocked.

### (Supplementary note 10)

The reception method described in the supplementary note 6 or 7, in which after the entry of the visitor is permitted, an output unit that cooperates with the reception telephone issues a gate identification code as a medium that is either a sheet of paper or a card, the visitor holds the gate identification code over a reader that cooperates with a gate terminal, and the gate is unlocked.

This application claims priority based on Japanese Patent Application No. 2021-100320 filed on June 16, 2021, and the entire disclosure thereof is incorporated herein.

### Reference Signs List

- 5: VISITOR
- 10: MOBILE TERMINAL
- 20: RECEPTION TELEPHONE
- 21: DISPLAY
- 22: CAMERA
- 23: SCANNER
- 24: MICROPHONE
- 25: SPEAKER
- 26: IDENTIFICATION CODE
- 30: GATE TERMINAL
- 31: READER
- 32: GATE
- 40: COMMUNICATION DEVICE
- 41: DISPLAY UNIT
- 50: MANAGEMENT SERVER

## Claims

1. A reception system wherein
when a person in charge of reception registers visit information of a visitor beforehand, a visitor identification code is issued, and the visitor acquires the visitor identification code that has been issued on a mobile terminal of the visitor,
the visitor holds the visitor identification code displayed on the mobile terminal of the visitor over a reader that cooperates with a reception telephone to cause the reader to read the visitor identification code, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

2. A reception system wherein
a visitor causes a camera of a mobile terminal to read an identification code posted in a vicinity of a reception telephone, a predetermined site is displayed on a display of the mobile terminal, the visitor selects a desired person in charge of reception on the predetermined site, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

3. The reception system according to claim 1, wherein a gate is unlocked by holding the visitor identification code of the visitor to whom the entry has been permitted over a reader that cooperates with a gate terminal.

4. The reception system according to claim 1 or 2, wherein after the entry of the visitor is permitted, a gate identification code is issued, the visitor acquires the gate identification code that has been issued on the mobile terminal of the visitor, and holds the gate identification code over a reader that cooperates with a gate terminal, and the gate is unlocked.

5. The reception system according to claim 1 or 2, wherein after the entry of the visitor is permitted, an output unit that cooperates with the reception telephone issues a gate identification code as a medium that is either a sheet of paper or a card, the visitor holds the gate identification code over a reader that cooperates with a gate terminal, and the gate is unlocked.

6. A reception method wherein
when a person in charge of reception registers visit information of a visitor beforehand, a visitor identification code is issued, and the visitor acquires the visitor identification code that has been issued on a mobile terminal of the visitor,
the visitor holds the visitor identification code displayed on the mobile terminal of the visitor over a reader that cooperates with a reception telephone to cause the reader to read the visitor identification code, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

7. A reception method wherein
a visitor causes a camera of a mobile terminal to read an identification code posted in a vicinity of a reception telephone, a predetermined site is displayed on a display of the mobile terminal, the visitor selects a desired person in charge of reception on the predetermined site, the reception telephone automatically makes a call to a communication device of the person in charge of reception, the person in charge of reception responds on the communication device, and a hands-free call is established between the visitor and the person in charge of reception, and
the person in charge of reception confirms the visitor on a display unit that cooperates with the communication device from an image of the visitor imaged by a camera that cooperates with the reception telephone, and entry of the visitor is permitted.

8. The reception method according to claim 6, wherein a gate is unlocked by holding the visitor identification code of the visitor to whom the entry has been permitted over a reader that cooperates with a gate terminal.

9. The reception method according to claim 6 or 7, wherein after the entry of the visitor is permitted, a gate identification code is issued, the visitor acquires the gate identification code that has been issued on the mobile terminal of the visitor, and holds the gate identification code over a reader that cooperates with a gate terminal, and the gate is unlocked.

10. The reception method according to claim 6 or 7, wherein after the entry of the visitor is permitted, an output unit that cooperates with the reception telephone issues a gate identification code as a medium that is either a sheet of paper or a card, the visitor holds the gate identification code over a reader that cooperates with a gate terminal, and the gate is unlocked.
